# EUROPEAN PATENT SPECIFICATION

(11) **EP 1 893 031 B1**
(45) Date of publication and mention of the grant of the patent: **10.10.2012**
(21) Application number: 06747252.2
(22) Date of filing: 01.06.2006
(51) Int. Cl.: A22C 17/00, A22B 5/00

(54) **CUTTING METHOD AND APPARATUS FOR SEPARATING BONE FROM CARCASS**
SCHNEIDVORRICHTUNG UND -VERFAHREN ZUM TRENNEN EINES KNOCHENS VON EINER KARKASSE
DISPOSITIF ET PROCÉDÉ DE DÉCOUPE PERMETTANT DE SÉPARER L'OS DE LA CARCASSE

(30) Priority: 21.06.2005 JP 2005180058
(43) Date of publication of application: 05.03.2008
(73) Proprietor: Mayekawa Mfg. Co., Ltd., Tokyo 135-0046 (JP)
(72) Inventor: INOMATA, Shuichi, Sueyoshi-cho, Soo-gun, Kagoshima 8998605 (JP); TOYODA, Naoki, c/o MAYEKAWA MFG.CO., LTD., Tokyo 1350046 (JP); CHIMURA, Takeshi, c/o MAYEKAWA MFG.CO., LTD., Tokyo 1350046 (JP); OHBA, Yuichi, c/o MAYEKAWA MFG.CO., LTD., Tokyo 1350046 (JP)
(74) Representative: Adorno, Silvano
(86) International application number: PCT/JP2006/311663
(87) International publication number: WO 2006/137278

(56) References cited:
- EP-A- 0 109 901
- WO-A-97/30594
- WO-A-03/028469
- US-A- 4 131 972
- US-A1- 2004 142 651

## Description

### Technical Field

The present invention relates to a cutting apparatus a cutting method for automatically separating spinous processes and bones from carcass of slaughtered animals such as pigs, cows and sheep, or for separating a backbone from a fish meat, whereby a separation yield is improved without leaving the meat at the bone.

### Background Art

In a conventional dissection process of slaughtered domestic animals such as pigs and so on, a belly portion is cut and bled, internal organs are taken out, a carcass is cut along a center line of a backbone in order to obtain a pair of half-cut right and left blocks of the carcasses. Then, a shoulder butt, a loin, a boned rib and a ham (in case of a pig) and so on are divided and further bones of each of the divided blocks are taken away.

A separation of meat from backbone and a separation of meat from spinous processes projecting from the backbone are necessary, but it takes much time because the above mentioned separating processes area carried out by hand, not automated.

There are various conventional backbone cutter for obtaining the half-cut block of the carcass. For example, JP H 54-10178A discloses a preferable cutter for cutting the backbone. Further, JP2004-261166A discloses a spinous processes separation apparatus which is used before the backbone cutting, in order to separate the spinous processes from the red meat. Concretely, in JP2004-261166A, the blades are inserted from right and left sides of the spinous processes, thereby cutting and separating the spinous processes from the read meat.

The conventional cutter blade 01 as disclosed in JP H 54-10178 A as shown in FIG. 28 is inserted between the spinous processes 34 and the mammillary processes 161 parallel to the spinous processes 34. However, the cutter blade 01 is not guided between them, comes out of the spinous processes, damages the core of the loin. Thus, the separation becomes unstable. The bent portion 03 of the cutter blade 01 hits the spine edges.

Also WO 97/30594 discloses a tool for automatic cutting along spinous processes of a carcass or a part thereof, comprising two knives with parallel blades spaced apart from each other and mounted on a knife holder, each knife having a free cutting part designed with a rectilinear first cutting edge and a curved, tapered second cutting edge, Cutting into bone parts is tried to be avoided by a rounded groove, not providing a bone contact portion.

### Disclosure of Invention

Therefore, an object of the present invention to provide a cutter which can separate meat from the bone, without damaging the meat, and without coming out from a gap between the spinous processes. Another object of the present invention is to provide an automatic separation method by using the above-mentioned cutter.

First, the cutter of the present invention separates a meat attached to a plurality of bones which project from a backbone or other bone and get separated with each other in a row. The cutter comprises a blade body which extends from a base plate through a first bent portion, further, a blade edge which projects from an edge of said blade body and is bent at a second bent portion which is bent along a direction same as said first bent portion, and further, a bone contact portion which is substantially linear and is provided at a position connecting said blade body with said blade edge, said position being opposite to said second bent portion. Further, a portion from said first portion through said second bent portion to said blade edge is sharpened.

Second, the bone contact portion is longer than a spacing between said bones in a row.

Third, said bone contact portion is two times or three times longer than a spacing between said bones in a row.

Forth, said bone contact portion is substantially perpendicular to said base plate.

Fifth, said bone contact portion is a double ground blade.

Sixth, the cutting method of the present invention using the above-mentioned cutter comprises the steps of first step of positioning said cutter at an upper end of a boundary between the row of bones and the meat, second step of advancing said blade edge into said row of said bones, third step of inclining said blade edge upwardly, forth step of inclining said blade edge downwardly, when said blade edge reaches roots of the bones, and fifth step of moving said cutter downwardly toward an lowest end of the boundary between the row of bones and the meat, with said bone contact portion contacting on said roots of said bones.

Seventh, said first step is a step for positioning said cutter in a boundary between the row of spinous processes and said meat. The third step is a step for inclining said blade edge downwardly, when said blade edge reaches a hollow portion between mammillary processes and said roots of said spinous processes. The fifth step is a step for moving said cutter downwardly toward said lowest end of the boundary between the row of the bones and the meat, with said bone contact portion contacting on said hollow portion between said mammillary processes and said roots of said spinous processes.

First, according to the present invention, the meat separation proceeds from the root of the bones toward their top ends, due to the specific structure of the above-mentioned cutter, thereby preventing the cutter from coming out of the carcass. Further, the cutter blade edge is guided by the bones in a row, thereby preventing the cutter from damaging the core of the loin meat, decreasing the meat left at the bones and obtaining the stable yield for obtaining the meat.

Second, according to the present invention, the cutter is surely prevented from coming out from the carcass, because the bone contact portion is longer than a spacing between said bones.

Third, according to the present invention, the friction between the cutter and bones or meat is decreased, thereby smoothly moving the cutter from the uppermost end to the lowermost end of the boundary between the row of bones and the meat, because said bone contact portion is longer between two times and three times of a spacing between said spines.

Forth, according to the present invention, the cutter is surely guided by the bone contact portion, because the blade base plate is directed to the horizontal direction and the bone contact portion is pressed parallel to the roots of the bones.

Fifth, the cutter blade is surely inserted between the bones and meat, because the edge of the bone contact portion is made double ground edge.

Sixth, according to the cutting method of the present invention, the cutter blade edge proceeds the boundary between the row of bones and meat and then the sharpened edge formed between the first bent portion and the second bent portion, because the blade edge is inclined upwardly. Thus, the meat is separated from the bone root. Thus the cutter is prevented from coming out from the carcass, thereby smoothly separating the bone from the meat. The present invention is preferable for the inserting the cutter between the mammillary processes and the spinous processes. Further, the present invention is preferable for separating the meat from the rib and the fish meat from the backbone.

### Brief Description of Drawings

FIG. 1 is an elevational view of the whole apparatus of the present invention.
FIG. 2 is a left side view of whole apparatus as shown in FIG. 1. 1.
FIG. 3 is a plan view of the whole apparatus as shown in FIG. 1.
FIG. 4 is a plan view of whole apparatus as shown in FIG. 1 except a carcass transportation unit.
FIG. 5 (a) is a plan view of the carcass transportation unit (carcass forward) and FIG. 5(b) is its elevational view.

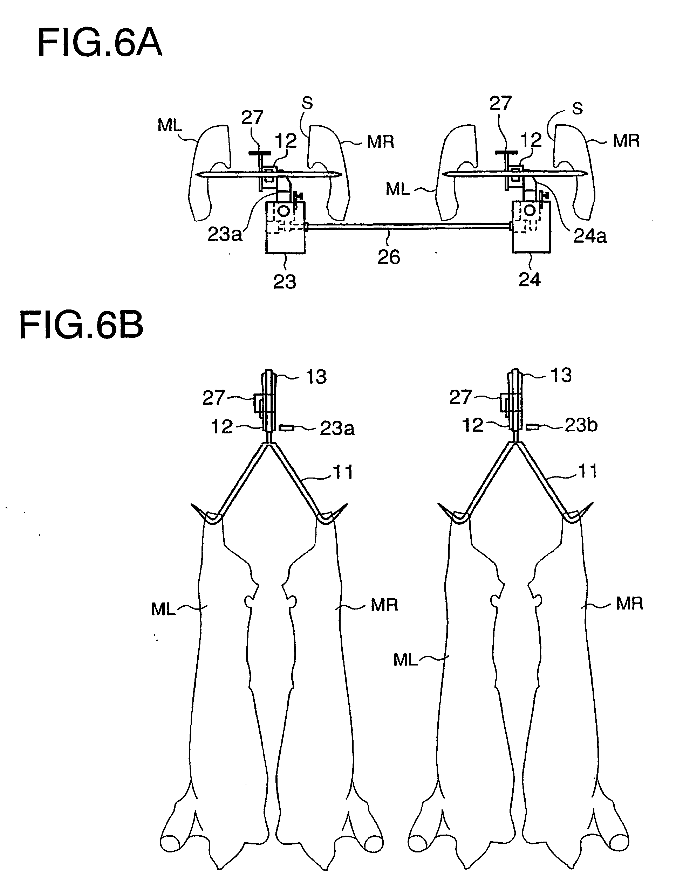

FIG. 6 (a) is a plan view of the carcass transportation unit (stopper forward) and FIG. 6(b) is its elevational view.
FIG. 7 (a) is a plan view of the gambrel fixing means (before fixing) in the sensor station S and FIG. 7(b) is its elevational view.
FIG. 8 (a) is a plan view of the gambrel fixing means (after fixing) in the sensor station S and FIG. 8(b) is its elevational view.
FIG. 9 is a perspective view of the detection apparatus for detecting the cut upper end of the spine.
FIG. 10 is a perspective view of the detection apparatus for detecting the cut upper end of the spine.
FIG. 11 is a perspective view of the detection apparatus for detecting the cut lower end of the spine.
FIG. 12 is a perspective view of the detection apparatus for detecting the cut lower end of the spine.
FIG. 13 (a) is a plan view of the carcass fixing means (before forwarding) which stops at the cutting position in the cutting station C and FIG. 13(b) is its elevational view.
FIG. 14 (a) is a plan view of the carcass fixing means (after forwarding) which stops at the cutting position in the cutting station C and FIG. 14(b) is its elevational view.
FIG. 15 (a) is a plan view of the carcass fixing means (arm opened) which stops at the cutting position in the cutting station C and FIG. 15(b) is its elevational view.
FIG. 16 (a) is a plan view of the work open guide (before forwarding) in the cutting station C and FIG. 16(b) is its elevational view.
FIG. 17 (a) is a plan view of the work open guide (after forwarding) in the cutting station C and FIG. 17(b) is its elevational view.
FIG. 18 (a) is a plan view of the cutter unit (before forwarding) in the cutting station C and FIG. 18(b) is its elevational view.
FIG. 19 (a) is a plan view of the work open guide (after forwarding and after fixing) in the cutting station C and FIG. 19(b) is its elevational view.
FIG. 20 is an elevational view of the ankle holding means in the cutting station C.
FIG. 21 is a plan view of the ankle holding means in the cutting station C.
FIG. 22 is a side view of the ankle holding means in the cutting station C.
FIG. 23 (a) is a plan view of the cutter unit (after forwarding) in the cutting station C and FIG. 23(b) is its elevational view.
FIG. 24 (a) is a plan view of the work open guide (after forwarding and after fixing) in the cutting station C of embodiment 1 and FIG. 24(b) is its elevational view.
FIG. 25 (a) is a plan view of the cutter unit (descending) in the cutting station C of embodiment 1 and FIG. 25(b) is its elevational view.
FIG. 26 (a) is a plan view of the spine and the nipple and FIG. 26(b) is its side view.
FIG. 27 (a) is a plan view of the cutting blade of the present invention in the cutting station C, FIG. 27(b) is its elevational view., FIG. 27(c) is a plan view when the carcass is inserted, FIG. 27(d) is a side view of FIG. 27(c) and FIG. 27(e) is a cross sectional view taken on line "e" of FIG. 27 (b).
FIG. 28 (a) is a plan view of the conventional cutting blade, FIG. 28(b) is its elevational view., FIG. 28(c) is a plan view when the carcass is inserted, FIG. 28(d) is a side view of FIG. 28(c) and FIG. 28(e) is a cross sectional view taken on line "e" of FIG. 28 (b).

### Best Mode for carrying out the Invention

Preferred embodiment of the present invention is explained, referring to the drawings. It should be understood that the present invention is not limited to specifically described sizes, materials and relative arrangements and so on of the constituent components.

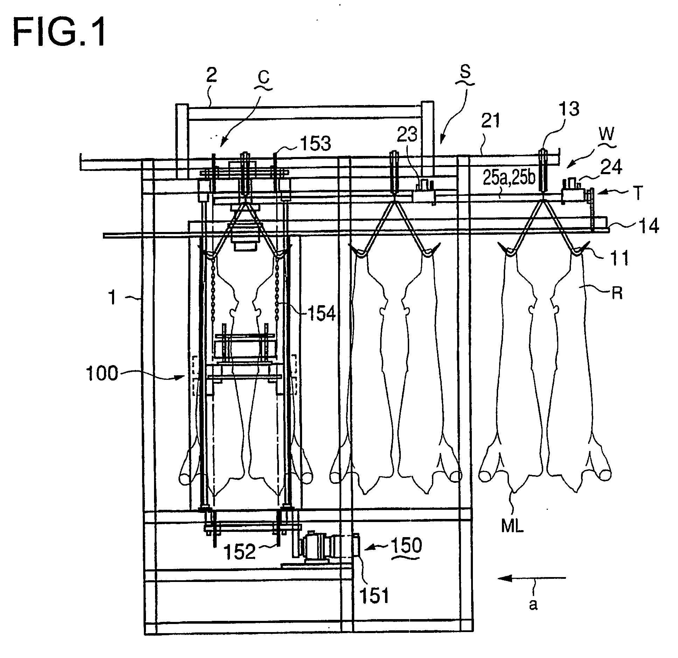

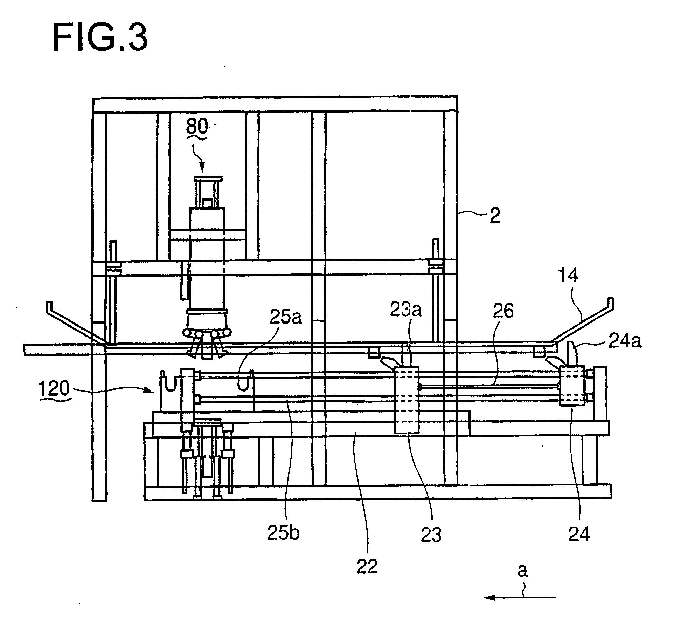

As shown in FIG. 1 through FIG. 4, the spine separation apparatus of the present invention comprises a vertical frame 1, a horizontal frame 2, a transport unit T for transporting carcasses in a right row and a left row, a waiting station W, a sensor station S and a cutting station C. A pair of half-cut carcasses MR and ML of which head and internal organs are cut way is hung from a gambrel stick 11 by an Achilles tendon of an ankle and is transported by the transport unit T along a direction shown by an arrow "a". Here, a trolley 13 for supporting the gambrel stick 11 slides on a rail 21.

There is disposed in the transport unit T an air cylinder 22 of which piston is fixed with a first pusher 23 which is supported by support rods 25a and 25b, thereby transporting the gambrel stick 11 by a prescribed distance along the arrow "a". The second pusher 24 is connected with the first pusher 23 by a connecting rod 26 and slides on the support rods 25a and 25b together with the first pusher 23.

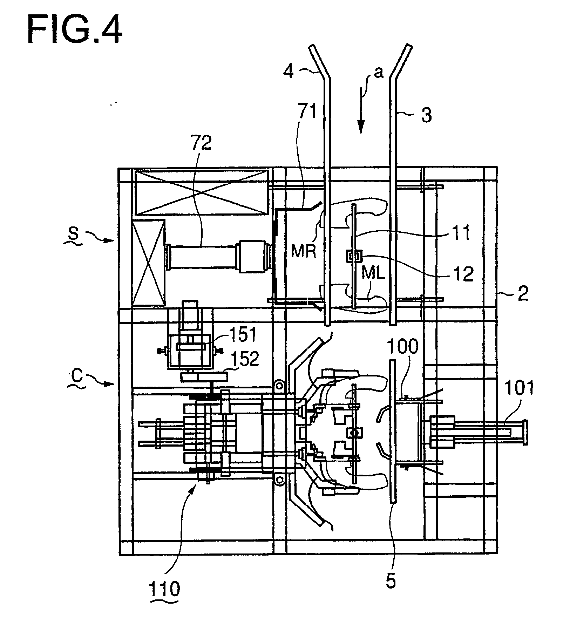

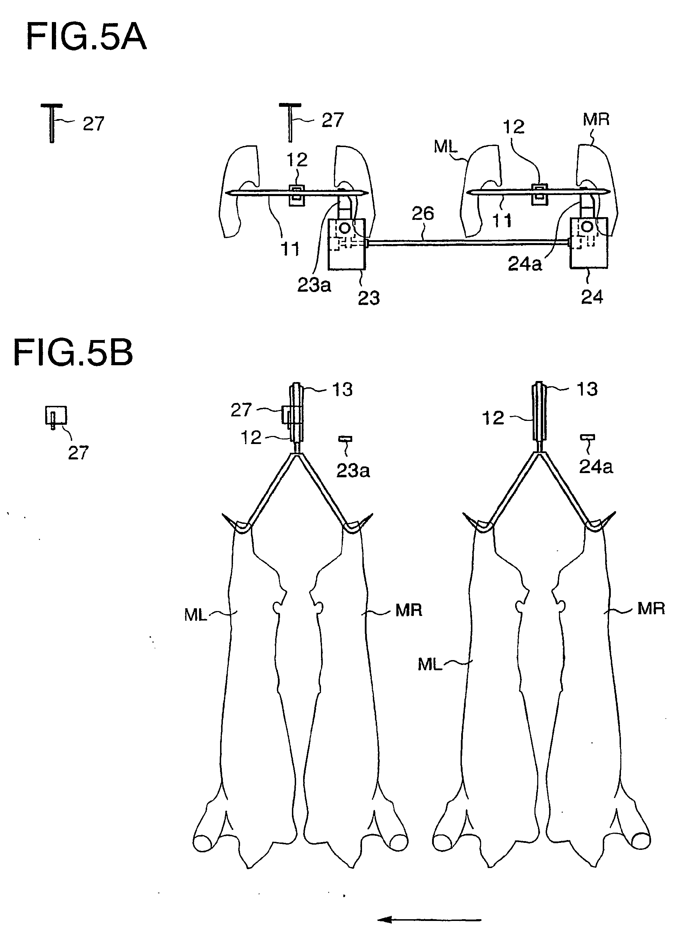

As shown in FIG. 4 and FIG. 5, the air cylinder 22 moves the first and second pushers 23 and 24 along the arrow "a", pushes a base portion 12, transports the carcasses MR and ML and stops the carcasses MR and ML, by a pushed-out stopper 27, at a spinous processes detection position in the sensor station and at a cutting position in the cutting station.

The gambrel stick 11 is moved back and forth. When the gambrel stick 11 returns back, the gambrel stick 11 is inclined along the arrow "a" direction.

Further, a round rod 14 is horizontally disposed, in order to avoid an oscillation of the gambrel stick 11.

When the carcass stops at the above-mentioned detection position in the sensor station S and at the above-mentioned cutting position in the cutting station C, the trolley 13 and the gambrel stick 11 are fixed at those positions, thereby avoiding position shifts of the carcass.

Here, the gambrel stick fixation in the sensor station S is different from that in the cutting station C.

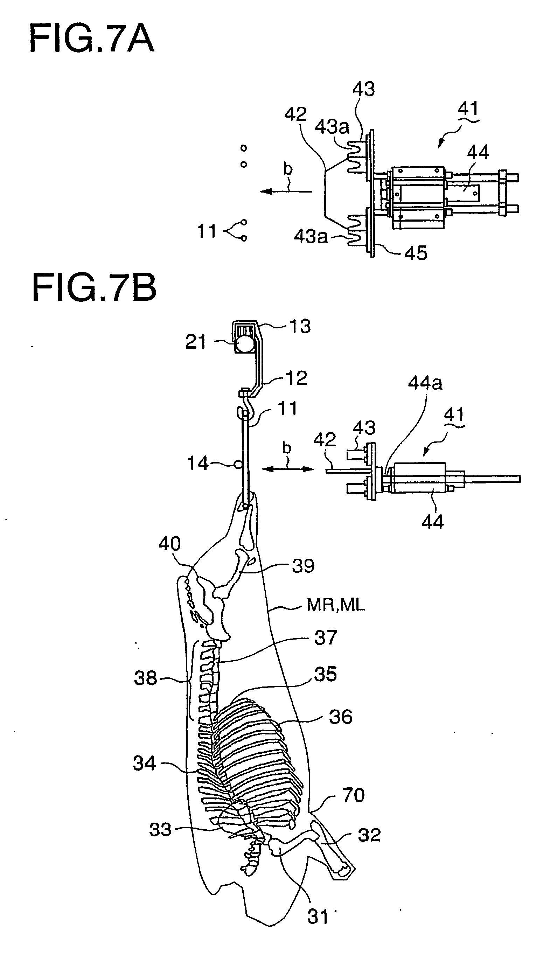

A fixing unit 41 in the sensor station S is shown in FIG. 7A. The carcasses MR and ML shown in FIG. 7B includes a humerus 31, an antebrachial bone 32, a shoulder blade 33, a spinous process 34, rib 35, rib cartilage 36, a backbone 37, a lumrod 38, thighbone 39, an ischium 40 and a shoulder root 70.

A guide plate 42 horizontally disposed has tapered portions. A fixing block 43 has four grooves 43a into which the gambrel stick 11 is fitted. The guide plate 42 and the fixing block 43 are horizontally disposed on a base plate 45 fixed with the piston 44a of the air cylinder 44. The gambrel stick fixing unit 41 moves back and forth along the arrow "b".

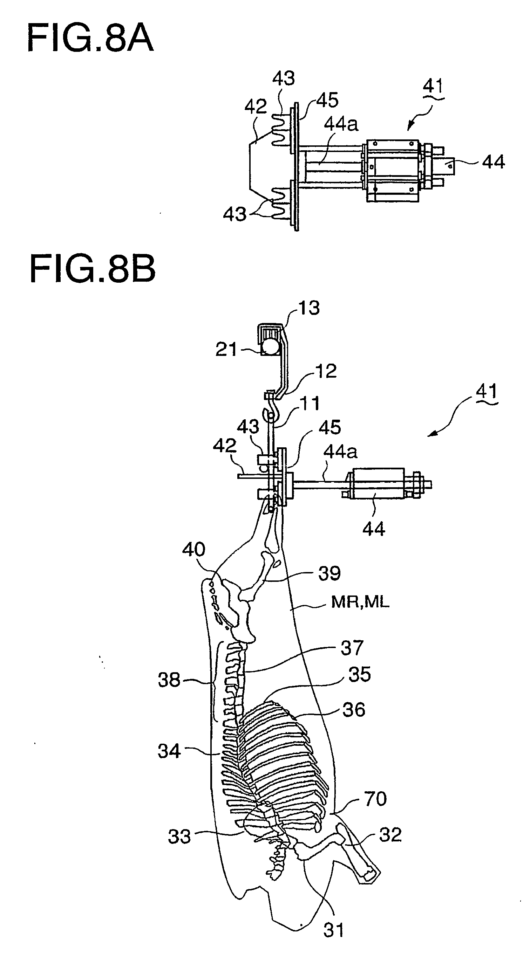

When the gambrel stick 11 stops at the prescribed position by the stopper 27, the base plate 45 is pushed out, along the arrow "b", by the air cylinder 44. The guide plate 42 is inserted into the gambrel stick 11, in order to execute the centering of the carcass, and then, the gambrel stick 11 is fitted into the groove 43a of the fixing block 43, thereby fixing the gambrel stick 11 at a prescribed detection position. FIG. 7A shows the gambrel stick 11 before being fixed, while FIG. 8 A shows the gambrel stick 11 after being fixed.

Next, a sensing process in the sensor station S in order to decide an insertion position of a spinous processes separation cutter in the cutting station C is explained..

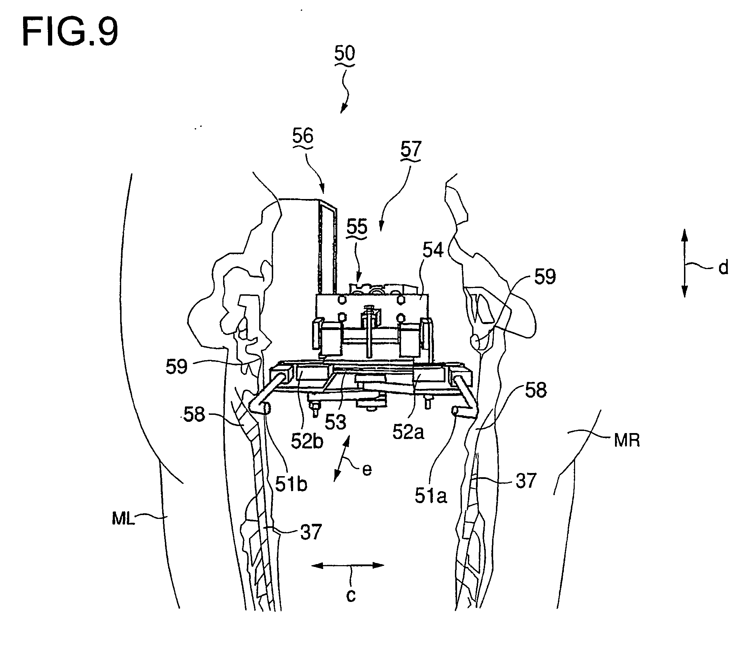

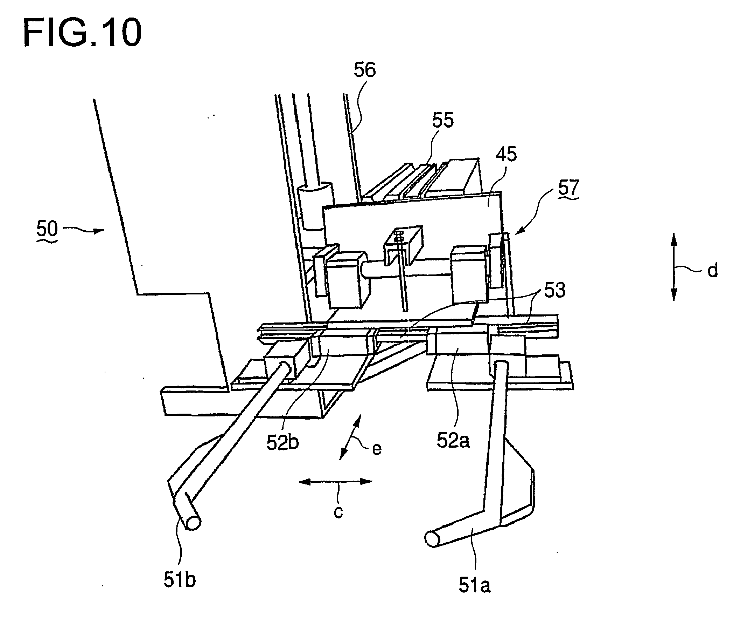

FIG. 9 and FIG. 10 are perspective views of an upper cutting end sensing apparatus 50 for detecting the upper end of the spinous processes 34 (cf. FIG. 7 A). The upper cutting end sensing apparatus 50 comprises detecting jigs of round rods 51a and 51b which are supported by sliders 52a and 52b which slide along a horizontally disposed rail 53 along "c" direction. Accordingly, the detecting jigs 51a and 51b slide along "c" direction.

A detecting unit 57 comprises the detecting jigs 51a and 51b, the sliders 52a and 52b, the rail 53 and a base plate 54 for fixing the rail 53. The detecting unit 57 moves back and forth by a forwarding mechanism 55 of an air cylinder and moves along the vertical direction by an elevator 56 of a not-shown servo motor.

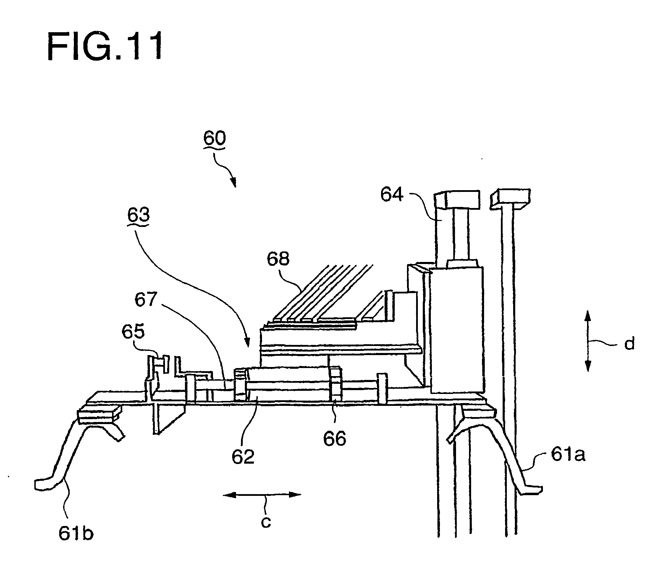

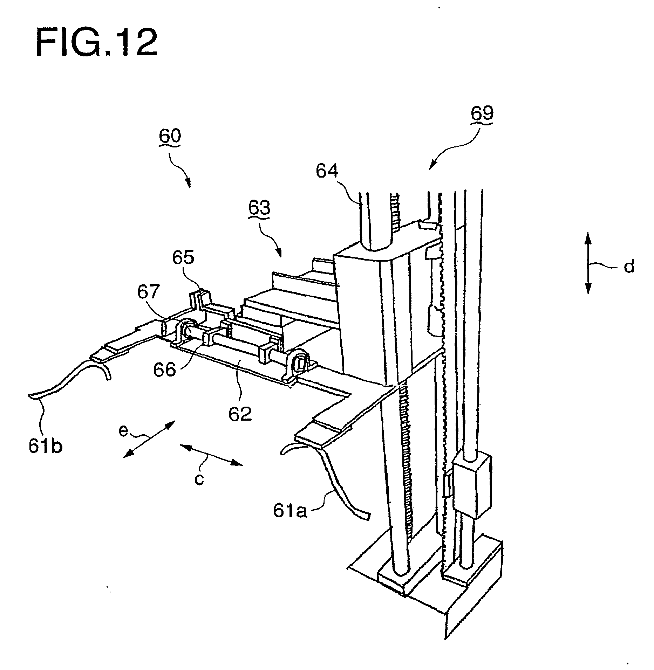

FIG. 11 and FIG. 12 are perspective views of a lower cutting end sensing apparatus 60 for detecting the lower end of the spinous processes. The lower cutting end sensing apparatus comprises detecting jigs 61a and 61b of round rods which are fixed by a support plate 62 which is supported through a fulcrum 67 by a support bracket 66 fixed with a detecting unit 63. Accordingly, the detecting jigs 61a and 61b incline along "c" direction around the fulcrum 67. The detecting unit 63 moves back and forth in a direction as shown by an arrow "e", relative to the carcass, by a forwarding mechanism 68 of an air cylinder. Further, the detecting unit 63 moves upward and downward in a direction as shown by an arrow "d", relative to the carcass, by an elevator 69 (the same as the elevator 56 as shown in FIG. 10) of a not-shown servo motor.

A sensor 65 senses an inclination of the detecting jigs 61a and 61b, when they descend and contact the shoulder root 70 as shown in FIG. 7B, thereby being inclined upward a little. Thus, the inclined position is the lower end of the spinous processes 34 as shown in FIG. 7B.

As shown in FIG. 4, a pushing arm 71 is a U-shaped arm of which tips are tapered and opened outward. The center portion of the pushing arm 71 is connected with an air cylinder 72. The pushing arm 71 is pushed out, by the air cylinder 72, toward the carcasses, when the carcasses MR and ML hung by the gambrel stick 11 stops at the detection position, whereby the carcasses MR and ML are pushed from the right and left sides toward the center and the oscillation of the carcasses MR and ML are stopped.

The carcasses MR and ML are hung by the gambrel stick 11 and are carried into the sensor station S, guided by guide rails 3 and 4.

When the carcasses MR and ML stop at the prescribed position, the pushing arm 71 is pushed out from the backside of the carcasses MR and ML toward the carcass side, in order to push the carcasses from the right and left hand toward the center, thereby stopping the carcass oscillation. Then, the detecting unit 57 of the upper cutting end sensing apparatus 50 and the detecting unit 63 of the lower cutting end sensing apparatus 60 are pushed out from the belly side toward the carcass side.

In the upper cutting end sensing apparatus 50 as shown in FIG. 9, the detecting unit 57 as a whole moves forward and the detecting jigs 51a and 51b enter between the right thigh and the left thigh. The detecting jigs 51a and 51b slide outside and contact the backbone 37 or the tail bones 58. Then, during the ascend of the detecting unit 57 by the elevator 56, the detecting units 51a and 51b grind the surface of the backbone 37 or the tail bones 58. When either one of the detecting jigs 51a and 51b contacts a pubic bone 59 over the tail bone 58, the detecting unit ascends and the detecting jig 51a or 51b holds the contact state by its spring force.

A not-shown sensor fixed on the base portion of the detecting unit 57 determines the position where the sensor reacts. The determined position is the upper detection position and the detecting unit 57 stops ascending. After determining the detection position, the detecting unit 57 returns to the usual waiting position.

The detecting unit 63 moves forward toward the carcass side, simultaneously when the lower cutting end sensing apparatus 60 as a whole moves forward and descends by a not-shown servo motor. Concretely, when the detecting jigs 61a and 61b contact the shoulder root 70 as shown in FIG 7B, the lower cutting end sensing apparatus 60 as a whole descends and the detecting jig 61a or 61b holds the contact position by their spring forces. The sensor 65 senses the time when the spring forces are acted. Thus, the position at which the sensor 65 reacts is the lower detection position and the sensor 65 stops.

Thus, the upper and lower end cutting position of the spinous processes are detected.

Next, the composition of cutting station C are explained.

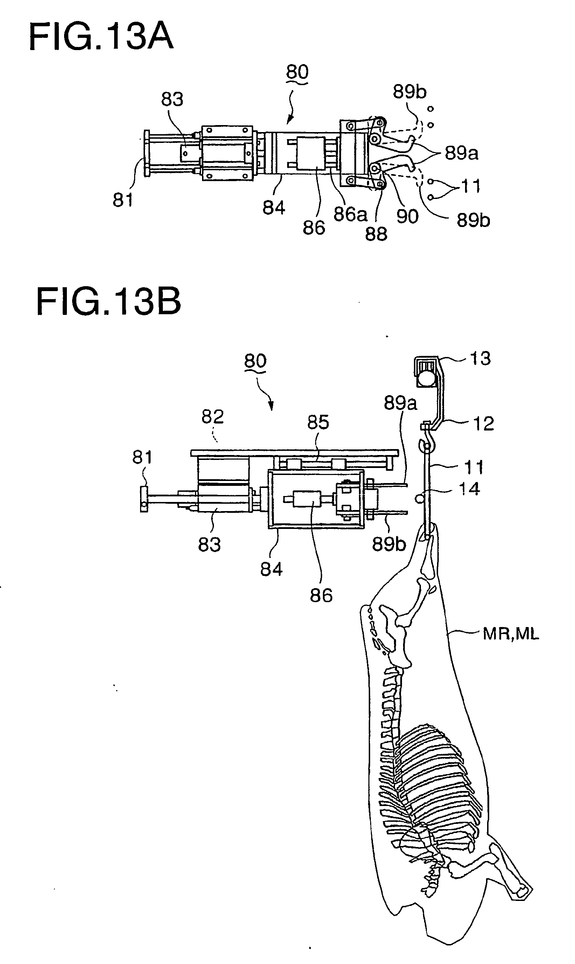

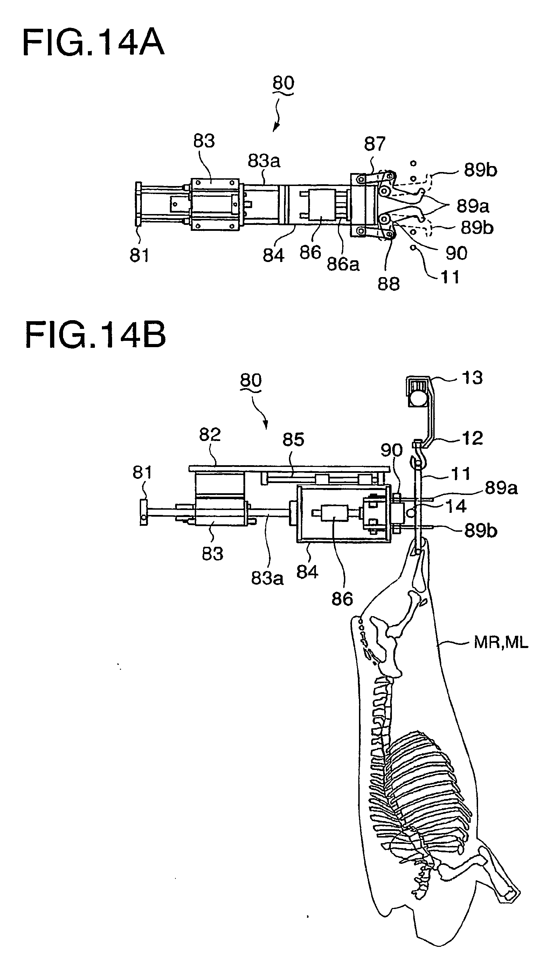

As shown in FIG. 13 through FIG. 15, a fixing apparatus 80 fixes the carcass which is stopped at the cutting position in the cutting station C fixed with a base portion 82. An end of an air cylinder 83 fixed with the base portions 81 and 82 is fixed with a box 84 which is supported by a guide rail 85 of the base portion 82. Thus, the box 84 slides along the rail 85, as the piston 83a slides.

An air cylinder 86 is provided in the box 84. A piston 86a of the air cylinder 86 is connected, through a link 87 and a fulcrum88, with two pairs of arms 89a and 89b which are vertically separated and can be rotated around an axes 90.

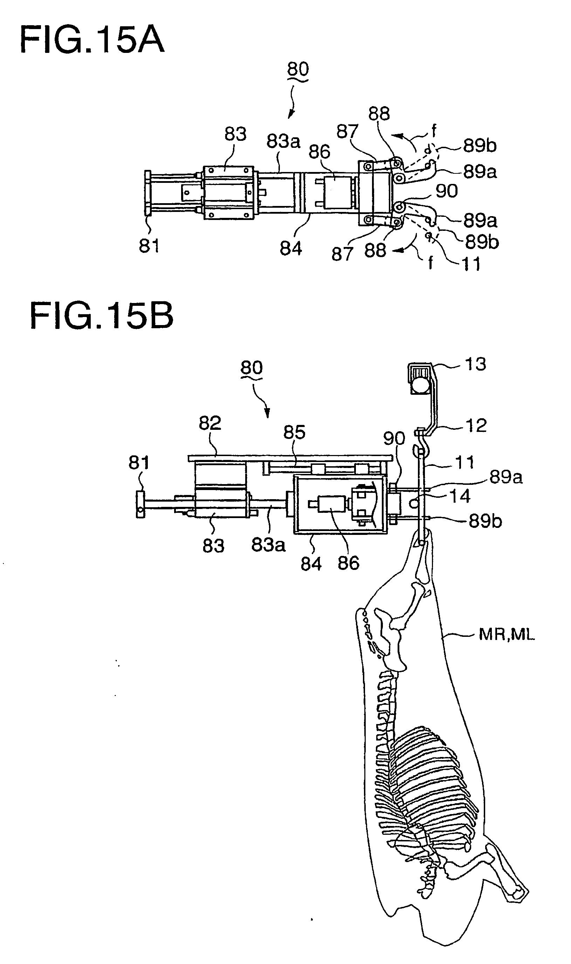

As shown in FIG. 13 through FIG. 15, the air cylinder 83 moves the box 84 toward the carcasses MR and ML stopped at the cutting position, thereby entering the arms 89a and 89b in the gambrel stick 11. Then, the piston 86a is pulled toward the air cylinder 86, thereby opening the arms 89a and 89b along the direction "f' as shown in FIG. 15 and accordingly fixing the gambrel stick 11. The lower arm 89b is opened more widely than the upper arm 89a, because the gambrel stick 11 is opened in the downward direction.

If the cutting process is completed, the fixing apparatus 80 closes the arms 89a and 89b and return back from the carcasses MR and ML.

Next, the cutting process is explained.

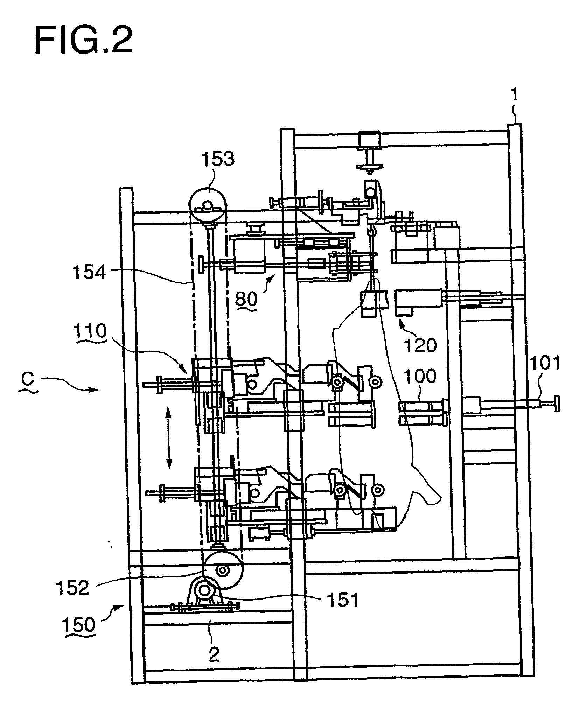

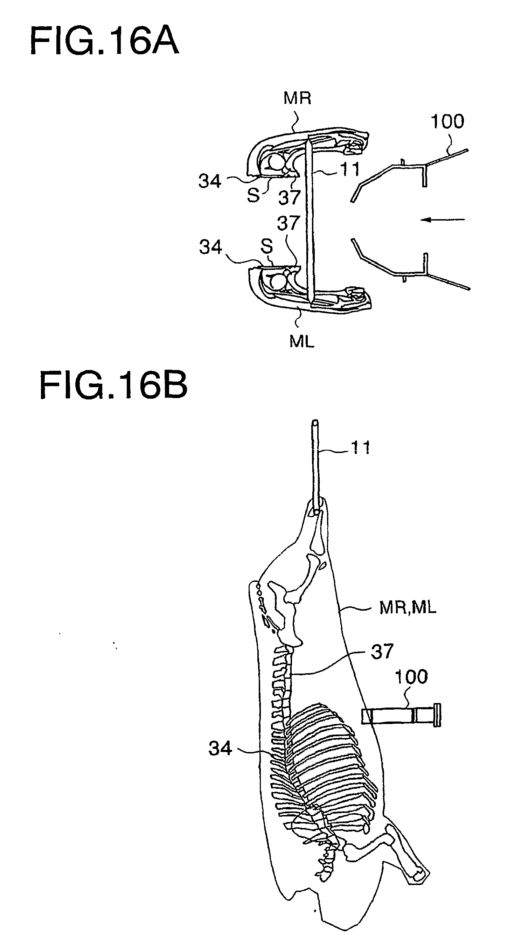

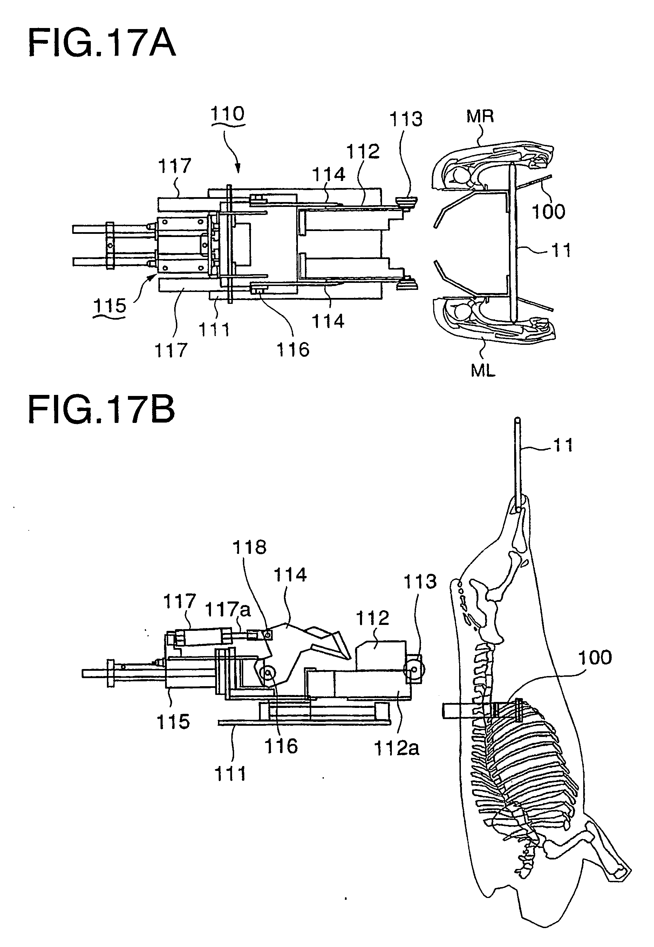

As shown in FIG. 16 and FIG. 17, a work opening guide 100 is inserted, from the belly side, between the right and left carcasses MR and ML. As shown in FIG. 2, The work opening guide 100 moves toward and away from the carcasses by an air cylinder 101. The work opening guide 100 widens a little the separation between the right carcass MR and the left carcass ML, thereby surely entering a backbone guide 112 as shown in FIG. 17 from the backbone side.

The backbone guide 112 in a cutter apparatus 110 is inserted between the widened carcass pair MR and ML from the back bone side. Here, there is shown in FIG. 16 a spinous processes 34 and a backbone 37 of the carcass which is cut, at the backbone center line, into the right and left portions.

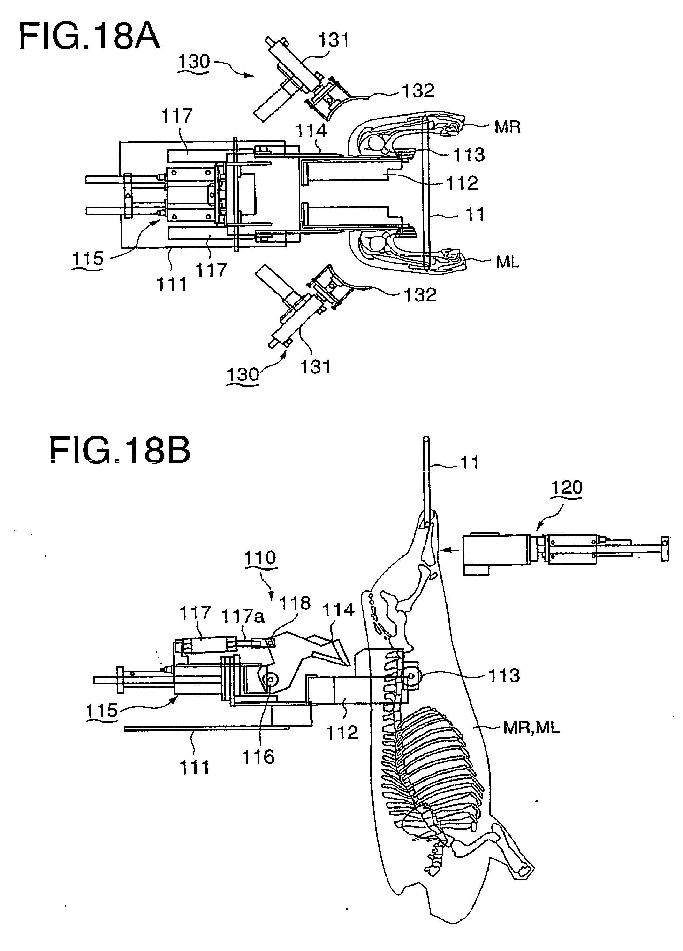

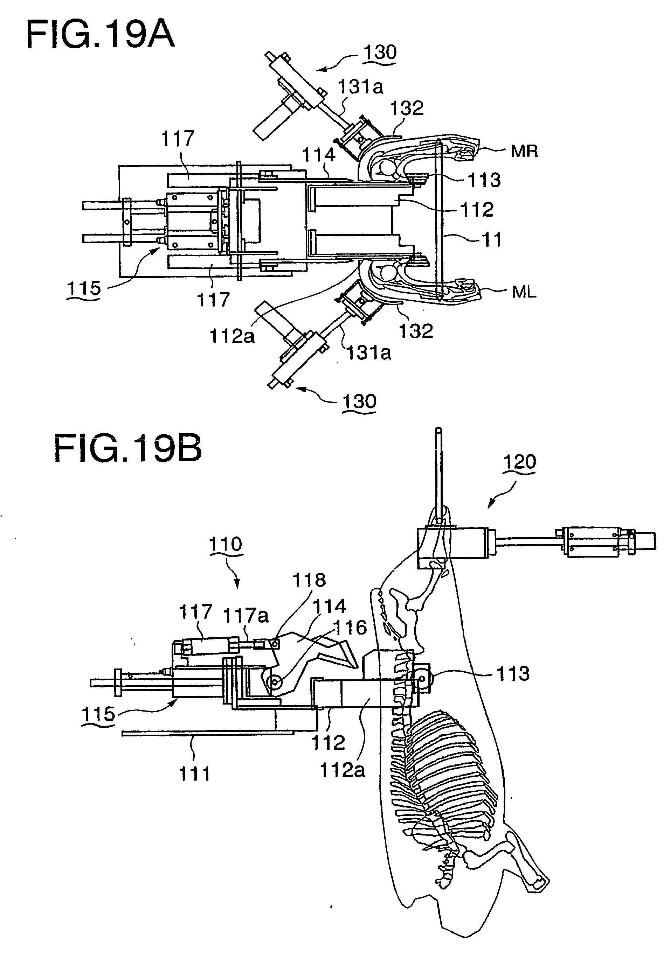

The backbone guide 112 moves on the base plate 111. Rollers 113 is fixed with an end of the backbone guide 112. As shown in FIG. 18 and FIG. 19, when the backbone guide 112 is inserted between the carcasses, the outer surfaces of the rollers 113 contact the backbone 37, prevents the carcass from oscillating, thereby facilitating the descend of the cutter apparatus 110.

A pair of cutting blades 114 rotate, relative to a cutter unit 115, around an fulcrum 116 and move, together with the cutter unit 115, to and from the carcasses. Further, the cutting blades 114 can be inclined around the fulcrum 116, because the blades 114 is connected, at a fulcrum 118, with a piston 117a of an air cylinder 117 fixed with the cutter unit 115.

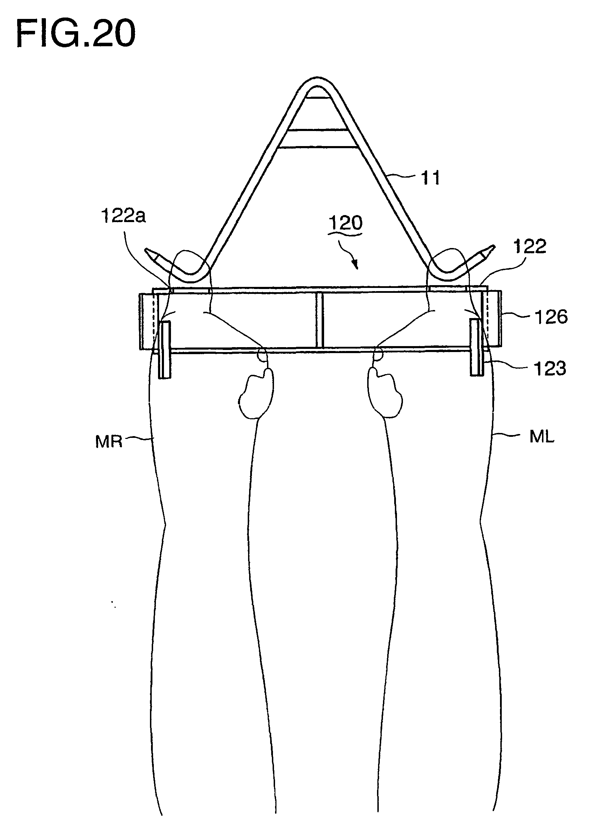

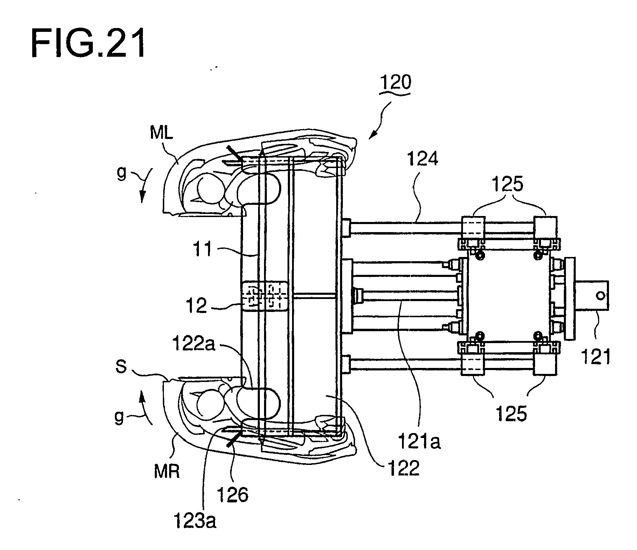

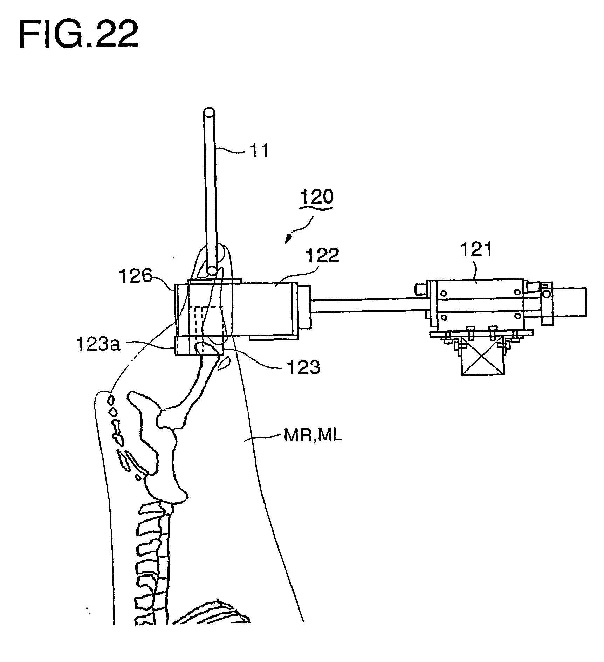

Next, referring to FIG. 20 through FIG. 22, an ankle pushing apparatus 120 as shown in FIG. 18 and FIG. 19 is explained. The ankle pushing apparatus 120 pushes the right and left ankles, when the right and left spinous processes are cut. There is provided, in the horizontal direction at an end of a piston 121a of an air cylinder 121, a pushing member 122 which has hollows 122a for loosely fitting the carcasses MR and ML. There are provided, at both front side ends of the pushing member 122, tapered plates 126 which are directed toward the outside of the carcasses MR and ML, as shown in FIG. 21. Further, there are provided, at the lower insides of the tapered plates 126, plates 123 which have tapered surfaces 123a directed to the outside of the carcasses MR and ML. Support guides 125 push the pushing plate 122 fixed with stiffening rods 124.

When the carcasses are stopped at the cutting position in the ankle pushing apparatus 120 in the cutting station C, the work opening guide 100 is inserted between the carcasses from the belly side, then, the backbone guide 112 is inserted between the carcasses from the backbone side. Next, before inserting the cutting blades 114 into the carcasses, the ankle pushing apparatus 120 horizontally moves forward toward the carcasses, thereby loosely fitting the ankles into the hollows 122a. Thus, the oscillation of the carcasses is stopped. When the ankles of the carcasses are fitted into the hollows 122a, the plates 123 rub the thighs below the ankles and gives torsion forces in a direction as shown by an arrow "g" as shown in FIG. 21 which allows the carcasses to come a little toward the center of the right and left row of the carcasses MR and ML. Accordingly, the oscillation of the carcasses are effectively prevented, thereby surely inserting the cutting blades 114 between the spinous processes and the mammillary processes.

As shown in FIG. 16 and FIG. 17, the work opening guide 100 moves backward, when the ankle pushing apparatus 120 pushes the ankles.

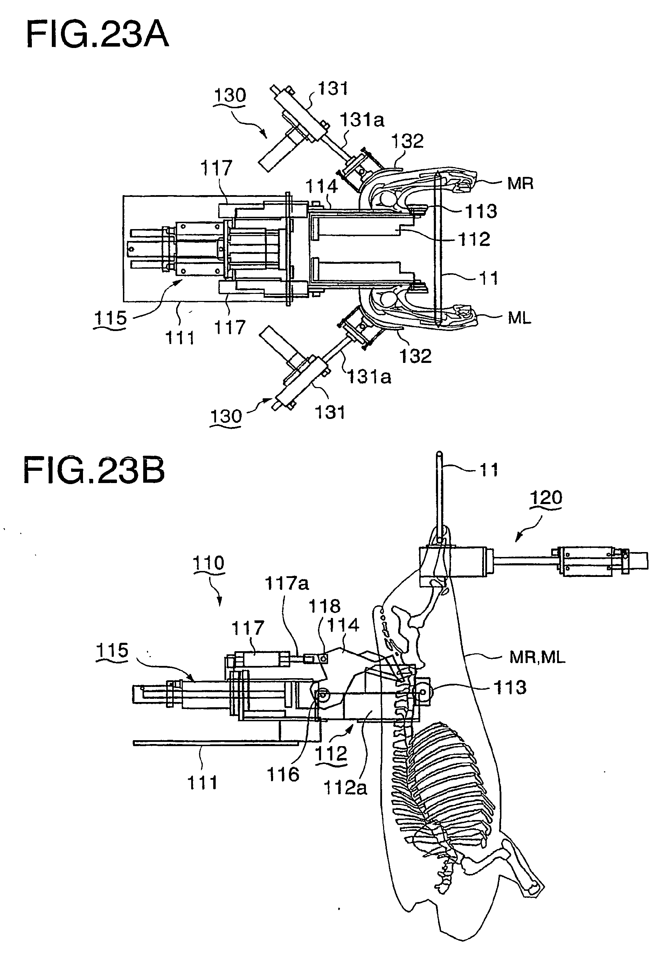

When the backbone guide 112 is inserted between the carcasses MR and ML, a guide surface 112a contact the cut surface of the carcasses, thereby fixing the carcasses. Then, as shown in FIG. 18 and FIG. 19, before moving forward the cutter unit 115 toward the carcass, a first carcass holding members 130 obliquely moves toward the carcasses and holds the carcass, as shown in FIG. 23A. The first carcass holding members 130 has curved portions 132 fixed with an end of a piston 131a of an air cylinder 131. The curved portions 132 are of shapes complementary to the carcass surfaces, thereby holding the carcasses from right and left sides.

After holding the carcass, the cutter unit 115 horizontally moves forward toward the carcass. The right and left cutting blades 114 are inserted between the right and left spinous processes and the right and left meats attached to the spinous processes.

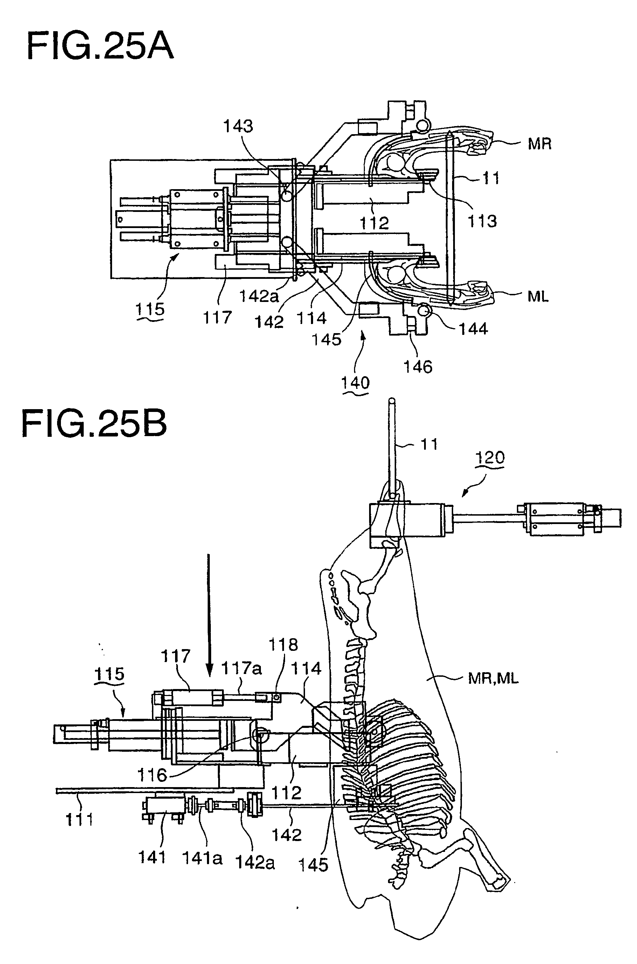

Next, the separation process of meat from spinous processes is explained, referring to FIG. 23A through FIG. 25B.

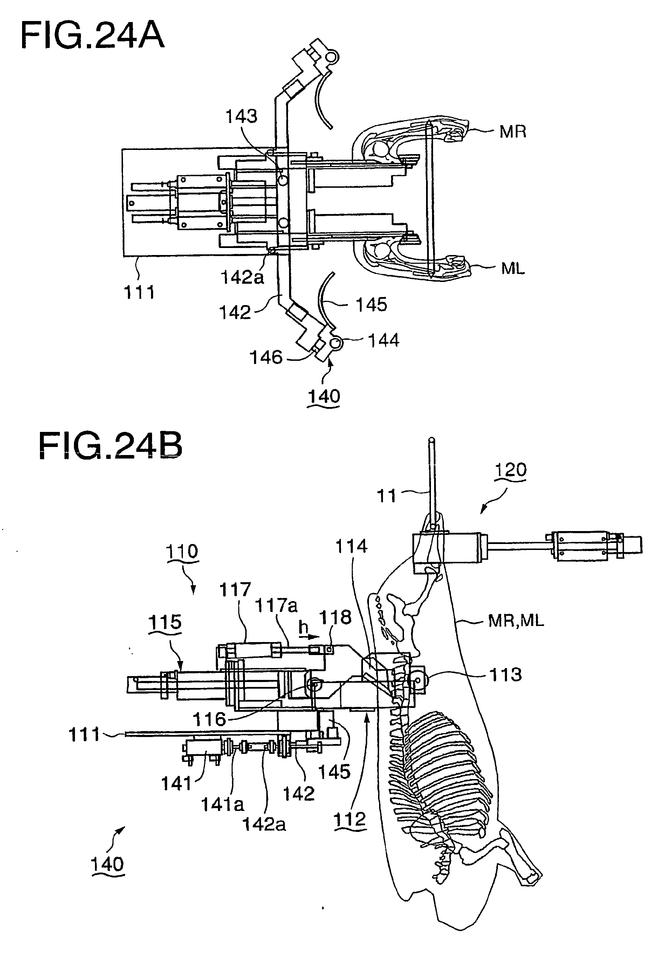

Holding the carcasses by the first carcass holding member 130, the cutter unit 115 is moved forward and a pair of the cutting blades 114 are inserted along the spinous processes. After inserting the cutting blades 114, the first carcass holding members 130 are separated from the carcasses and second carcass holding member 140 as shown in FIG. 24A hold the carcasses.

The second carcass holding member 140 is fixed on the lower surface of the base plate 111. A piston 141a of an air cylinder 141 of the second carcass holding member 140 is connected with rotating arms 142 and fulcrums 142a. An end of the rotating arm 142 is supported by the fulcrum 143 on the base plate 111, while another end of the rotating arm 142 with a rotating curved portion 145 for holding the carcass is supported by the fulcrum 144. A spring 146 is provided between the rotating curved portion 145 and the rotating arm 142. Even if the shape of the curved portion 145 is different from that of the carcass, the mis-fit is adjusted by the force of the spring 146. The second carcass holding member 140 and the cutter apparatus 110 are unified and accordingly the second carcass holding member 140 descends together with the cutter apparatus 110.

As shown in FIG. 24B, after inserting the cutting blades 114, the piston 117a of the air cylinder 117 is drawn out in a direction as shown by an arrow "h" and is inclined downward a little, then, the second carcass holding members 140 hold the carcasses and the cutter apparatus 110 descends in order to separate the spinous processes 34 from the carcasses 37.

Here, a drive apparatus for descending and ascending the cutter apparatus 110 is explained. A servo motor 151 as shown in FIG. 2 is fixed with the horizontal frame 2. A driving sprocket wheel 152 is connected with an axis of the servo motor 151, while a slave sprocket wheel 153 is provided at an upper frame. A chain 154 is tensioned between the sprockets and the cutter apparatus 110 is fixed with the chain 154. The cutter apparatus 110 driven by the servo motor 151 descends together with the chain 154 during the cutting process and ascends to the original position after completing the cutting process.

Here, the guide rail 5 as shown in FIG. 4 disposed horizontally in the cutting station C may be moved forward toward the carcasses, thereby holding the carcasses.

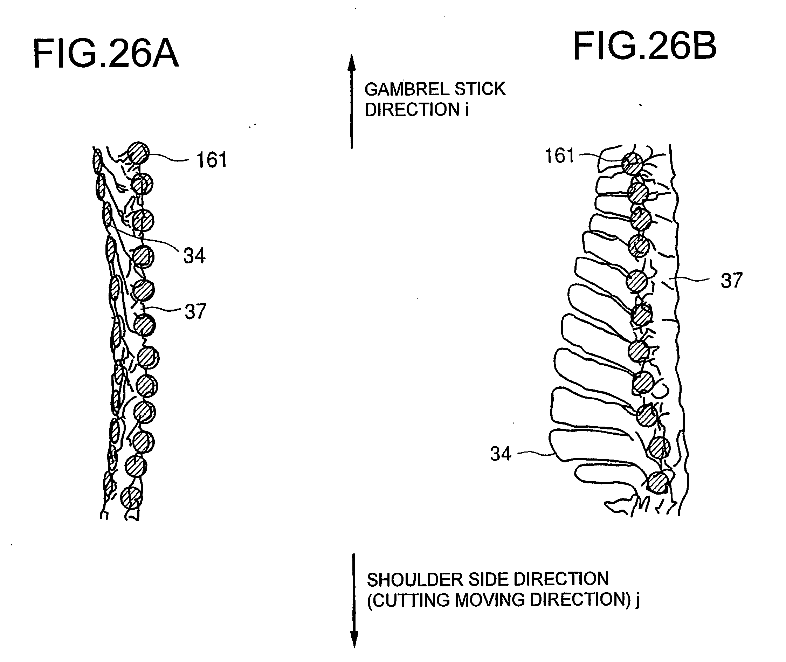

As shown in FIG. 26A and FIG. 26B, the mammillary processes 161 project from the surface of the backbone 37 in such a manner that the mammillary processes 161 alternatively stand side by side in a row parallel to another row of the spinous processes 34.

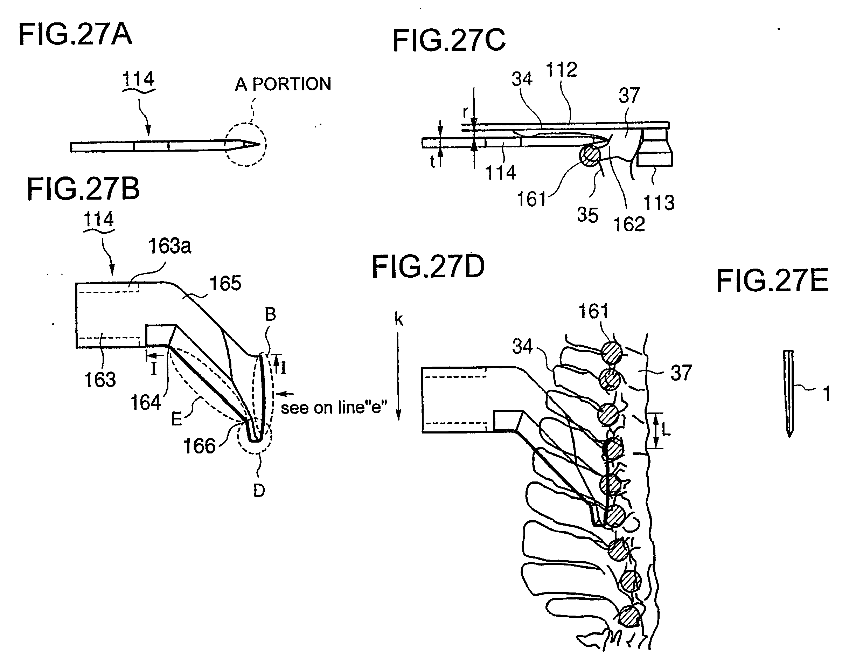

FIG. 27A through FIG. 27(e) show the shape of the cutting blade 114 and the inserting position of the cutting blade114. A "A" portion as shown in FIG. 27A, i.e., a region "I" as shown in FIG. 27B, is a double-ground blade which can be easily inserted between the spines 34 and the carcass MR and ML. As shown in FIG. 27C and FIG. 27 (d), the pointed tip of the cutting blade 114 is inserted into a hollow root 162 between the spine 34 and the nipple 161.

A distance "r" between the backbone guide 112 and the cutting blade 114 may be preferably about 5 mm. A thickness "t" of the cutting blade 114 may be preferably about 10 mm. A distance between the backbone guide 112 and the pointed tip of the cutting blade 114 may be preferably about 9 though 12 mm.

As shown in FIG. 27B, the cutting blade 114 comprises a base plate 163, a blade body 165 extending from the base plate 163 through a first bent portion 164 and a blade tip D bent, at a second bent portion 166, bent in the same direction as the blade body 165. Here, there is provided, at the base plate 163, a tapered surface 163a for a not-shown grasping member.

A linear backbone contact portion B is substantially parallel to the edge of the base plate 163.

As shown in FIG. 23B, the right and left cutting blades 114 are inserted, with the blade tips D being inclined upward, into the right and left carcasses MR and ML, respectively, when the piston 117a of the air cylinder 117 is moved back a little and the blade tips D are moved forward and inserted between the spinous processes 34 and the carcasses MR and ML by utilizing the spinous processes as guides.

As shown in FIG. 24B, after inserting the cutting blades 114, the piston 117a is moved forward in a direction as shown in an arrow "h" and the blade tip D is inclined downward vertically. Thus, when the cutting blades 114 descend, the backbone contact portions B contact the root hollows, thereby functioning as guides. Thus, the blade tips D cut the carcasses from the root of the spines 34 and slanted portions E separate, at the root sides of the spinous processes 34, the carcasses from the spinous processes 34, as shown in FIG. 24B. According to the carcass separation at the root of the spine 34, the core of loin meat is not damaged. Further, the cutting blade does not come out from between the spines 34, thereby stably maintaining a high yield for obtaining the carcass.

Here, a length of the backbone contact portion B is preferably longer than a spinous process to spinous process distance, in order to prevent the detachment of the cutting blade from the gap of the spinous processes. Further, the length of the contact portion B is preferably two or three times longer than the spinous process to spinous process distance, in order to reduce a friction during the carcass separation.

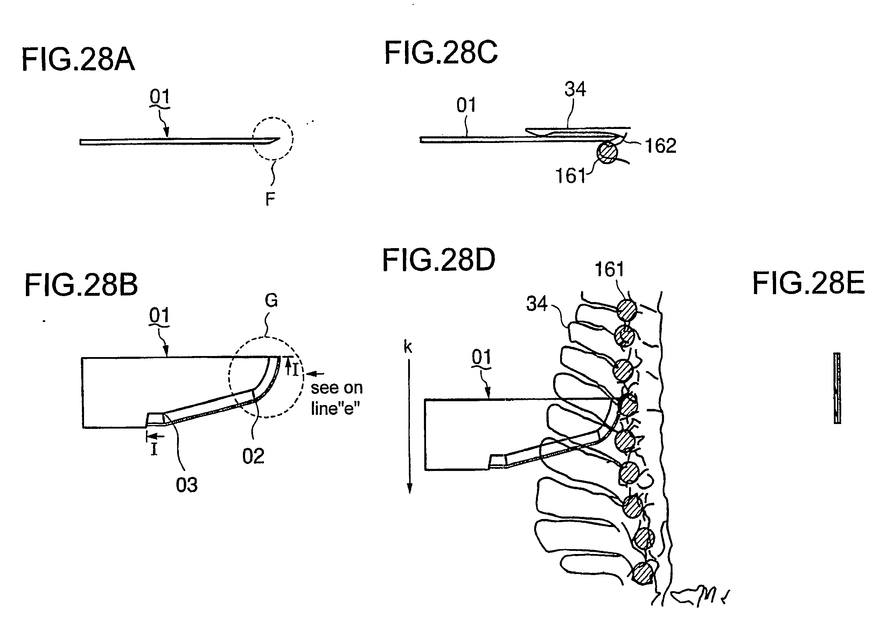

FIG. 28A through FIG. 28 (e) show a conventional cutting blade.

The blade tip F formed in region "I" is not a double-ground blade. Accordingly, the conventional blade does not easily intrude into the boundary between the spinous processes and the meat.

Further, due to a lack of backbone contact portion B, the conventional cutting blade is not guided between the spinous processes and the mammillary processes. Accordingly, the conventional cutting blade easily come out from the gap of spinous processes, damages the loin meat and the meat separation process is not stable.

Further, the bent portion 03 separate the meat, ahead of the blade tip G. Accordingly, the conventional blade easily come out from the gap between the spinous processes and does not follow the shape of the bone and meat.

According to the present invention, the fixation and the centering of the headless carcass is facilitated without employing any large-scaled apparatus, thereby providing an automatic spine separation apparatus which can execute the separation of the spine from the carcass which was difficult previously. Accordingly, the manual operation is excluded and the operational efficiency is greatly improved.

The fixation and centering of a pair of the carcasses in the sensing step and the cutting step are facilitated, because the pair of the carcasses MR and ML positioned opposite with each other in the right and left rows is hung at the ankles by the gambrel stick, is intermittently transported in the horizontal direction by the transport unit T and is stopped precisely at the sensing position of the sensor station S and at the cutting position of the cutting station C.

Further, the fixing unit 41 and the fixing apparatus 80 for fixing the gambrel stick in the sensor station S and the cutting station C surely stop the carcass at the sensing position and the cutting position, thereby facilitating the sensing step and the cutting step.

Further, the cutting position of the spinous processes of each carcass is precisely detected, even if the carcass is different in its size and shape, because the sensing apparatus 50 and 60 as shown in FIG. 9 and FIG. 11, respectively, detect the upper cutting end and the lower cutting end for separating the spinous processes from the meats.

Further, the backbone fixing guides 112 are inserted without fail between the backbone cutting surfaces and the cutting blades 114 are inserted without fail between the spinous processes 34 and the mammillary processes 161, because the distance between the pair of the carcasses is widened by the work opening guide 100, then, the guide surfaces 112a of the backbone fixing guides 112 contact the backbone cutting surfaces, then, the rollers 113 fix the end surface of the backbones 37, thereby cutting and separating the spines from the meats.

Further, the spine attached to the meat is surely separated, because the carcass is held by the ankle holding apparatus 120, the first holding apparatus 130 and second holding apparatus 140, thereby precisely aligning the cutting blade 114 between the spinous processes 34 and the mammillary processes 161.

Further, the cutting blade 114 as shown in FIG. 27 easily enters the region between the spine and the meat, because the blade edge C is oriented in the forward direction and works as a guide.

Further, the cutting blade 114 does not come out from the gap between the spinous processes, because the backbone contact portion B is two or more times longer than the gap between spinous processes..

Further, the meat is not left at all at the backbone, thereby maintaining a stable yield of obtaining the meat, because the backbone contact portion B is directed almost vertically, the blade end D separates the spinous processes from the meat prior to the backbone contact portion B, and then, the backbone contact portion B separates the meat at the root hollow portion 162.

### Industrial Applicability

The present invention is applicable for a spinous processes separation apparatus and method for the carcass of slaughtered animals such as pigs, cows and sheep.

## Claims

1. A cutting apparatus for separating a meat attached to a plurality of bones which project from a backbone or other bone and get separated with each other in a row, the apparatus comprising a cutter including a blade body (165) which extends from a base plate (163) through a first bent portion (164), a blade edge (D) which projects from an edge (E) of said blade body (165) and is bent at a second bent portion (166) which is bent along a direction same as said first bent portion (164), and a bone contact portion (B) which is substantially linear and is provided at a position connecting said blade body (165) with said blade edge (D), said position being opposite to said second bent portion (166), wherein a portion (E) from said first portion (164) through said second bent portion (166) to said blade edge (D) is sharpened,
**characterized by** comprising:
an upper and lower cutting end sensing apparatus (50, 60), suitable for detecting an upper and a lower cutting end of a boundary between said row of bones and said meat;
inclining means (115, 116, 117, 118), suitable for inclining said blade edge upwardly and downwardly; and
moving means (151, 152, 153, 154), suitable for moving said cutter downwardly toward said lowest end of said boundary between said row of bones and said meat, with said bone contact portion (B) contacting on said roots of said bones.

2. A cutting apparatus according to claim 1, wherein said bone contact portion (B) is longer than a spacing between said bones in a row.

3. A cutting apparatus according to claim 1, wherein said bone contact portion (B) is two times or three times longer than a spacing between said bones in a row.

4. A cutting apparatus according to claim 1, wherein said bone contact portion (B) is substantially perpendicular to said base plate (163).

5. A cutting apparatus according to claim 1, wherein said bone contact portion (B) is a double ground blade.

6. A cutting method for separating a meat attached to a plurality of bones which project from a backbone or other bone and get separated with each other in a row, by using a cutter (114) which comprises: a blade body (165) which extends from a base plate (163) through a first bent portion (164); and a blade edge (D) which projects from an edge (E) of said blade body (165) and is bent at a second bent portion (166) which is bent along a direction same as said first bent portion (164), **characterized by** comprising the steps of
positioning said cutter (114) at an upper end of a boundary between said row of bones and said meat;
advancing said blade edge (D) into the row of said bones,
inclining said blade edge upwardly;
inclining said blade edge (D) downwardly, when said blade edge (D) reaches roots of said bones; and
moving said cutter (114) downwardly toward a lowest end of said boundary between said row of bones and said meat, with said bone contact portion (B) contacting on said roots of said bones.

7. The cutting method according to claim 6, wherein:
said positioning step is a step for positioning said cutter (114) in a boundary between said row of spinous processes and said meat;
said inclining step is a step for inclining said blade edge (D) downwardly, when said blade edge (D) reaches a hollow portion between mammillary processes and said roots of said spinous processes; and
said moving step is a step for moving said cutter (114) downwardly toward said lowest end of said boundary between said row of bones and said meat, with said bone contact portion (B) contacting on said hollow portion between said mammillary processes and said roots of said spinous processes.

## Patentansprüche

1. Schneidvorrichtung zum Abtrennen von an einer Mehrzahl von Knochen hängendem Fleisch von den Knochen, welche von einer Wirbelsäule oder einem anderen Knochen in einer Reihe herausragen und voneinander getrennt werden, wobei die Vorrichtung ein Schneidmesser aufweist einschließlich eines Klingenkörpers (165), der sich von einer Basisplatte (163) heraus über einen ersten Biege-Bereich (164) erstreckt, eine Klingenschneide (D), die sich von einer Kante (E) des besagten Klingenkörpers (165) hervor erstreckt und an einem zweiten, Biege-Bereich (166) gebogen ist, der in derselben Richtung gebogen ist wie der erste Biege-Bereich (164), und einen Knochen-Kontaktbereich (B), der im Wesentlichen gerade ist und sich an einer Position befindet, welche den besagten Klingenkörper (165) mit der besagten Klingenschneide (D) verbindet, wobei die besagte Position sich gegenüber des besagten zweiten Biege-Bereichs (166) befindet, wobei ein Bereich (E) von dem besagten ersten Bereich (164) über den besagten zweiten Biege-Bereich (166) zu der besagten Klingenschneide (D) geschärft ist,
kennzeichnungsgemäß umfassend:
- eine obere und untere Schneid- und Sensiereinrichtung (50, 60), geeignet zum Erkennen eines oberen und unteren Schneidendes einer Begrenzung zwischen der besagten Knochenreihe und dem Fleisch;
- ein Neigungsmittel (115, 116, 117, 118), welches geeignet ist, um die besagte Klingenschneide nach oben und nach unten zu neigen; und
- ein Bewegungsmittel (151, 152, 153, 154), welches geeignet ist, um das besagte Schneidmesser nach unten zu dem tiefsten Ende der besagten Grenze zwischen der Knochenreihe und dem Fleisch zu bewegen, wobei der Knochen-Kontaktbereich (B) mit den Wurzeln der besagten Knochen in Kontakt tritt.

2. Schneidvorrichtung nach Anspruch 1, **dadurch gekennzeichnet, dass** der besagte Knochen-Kontaktbereich (B) länger ist als der Abstand zwischen den besagten Knochen in einer Reihe.

3. Schneidvorrichtung nach Anspruch 1, **dadurch gekennzeichnet, dass** der besagte Knochen-Kontaktbereich (B) zweimal oder dreimal länger ist als der Abstand zwischen den besagten Knochen in einer Reihe.

4. Schneidvorrichtung nach Anspruch 1, **dadurch gekennzeichnet, dass** der besagte Knochen-Kontaktbereich (B) im Wesentlichen rechtwinklig zu der besagten Basisplatte (163) ist.

5. Schneidvorrichtung nach Anspruch 1, **dadurch gekennzeichnet, dass** der besagte Knochen-Kontaktbereich (B) eine doppelt geschliffene Klinge ist.

6. Schneidverfahren zum Abtrennen von an einer Mehrzahl von Knochen hängendem Fleisch von den Knochen, welche von einer Wirbelsäule oder einem anderen Knochen in einer Reihe herausragen und voneinander getrennt werden, wobei die Vorrichtung ein Schneidmesser aufweist einschließlich eines Klingenkörpers (165), der sich von einer Basisplatte (163) heraus über einen ersten Biege-Bereich (164) erstreckt, eine Klingenschneide (D), die sich von einer Kante (E) des besagten Klingenkörpers (165) hervor erstreckt und an einem zweiten, Biege-Bereich (166) gebogen ist, der in derselben Richtung gebogen ist wie der erste Biege-Bereich (164), **gekennzeichnet durch** folgende Schritte:
- Positionieren des Schneidmessers (114) an einem oberen Ende einer Grenze zwischen der besagten Knochenreihe und dem besagten Fleisch;
- Vorschieben der besagten Klingenschneide (D) in die besagte Knochenreihe;
- Neigen der besagten Schneidklinge nach oben;
- Neigen der besagten Schneidklinge (D) nach unten, wenn die besagte Schneidklinge (D) die Wurzeln der besagten Knochen erreicht; und
- Bewegen des Schneidmessers (114) nach unten bis zu einem tiefsten Ende der besagten Grenze zwischen der besagten Knochenreihe und dem besagten Fleisch, wobei der besagte Knochen-Kontaktbereich (B) mit den Wurzeln der besagten Knochen in Kontakt steht.

7. Schneidverfahren nach Anspruch 6, wobei:
- der besagte Positionierungs-Schritt ein Schritt zum Positionieren des besagten Schneidmessers (114) auf einer Grenze zwischen der besagten Reihe von Dornfortsätzen und dem besagten Fleisch ist;
- der besagte Neigungsschritt ein Schritt ist zum Neigen der besagten Klingenschneide (D) nach unten, wenn die besagte Schneidklinge (D) einen Hohlbereich zwischen den Mammillar-Fortsätzen und den besagten Wurzeln der Dornfortsätze erreicht; und
- der besagte Bewegungsschritt ein Schritt ist zum Bewegen des besagten Schneidmessers (114) nach unten bis zum untersten Ende der besagten Grenze zwischen der besagten Knochenreihe und dem besagten Fleisch, wobei der besagte Knochen-Kontaktbereich (B) mit dem besagten Hohlbereich zwischen den besagten Mammillar-Fortsätzen und den besagten Wurzeln der Dornfortsätze in Kontakt steht.

## Revendications

1. Appareil de découpe pour séparer une viande fixée sur plusieurs os qui font saillie à partir de la colonne vertébrale ou d'un autre os et sont séparés les uns des autres dans une rangée, l'appareil comprenant un couteau comprenant un corps de lame(165) qui s'étend à partir d'une plaque de base (163) à travers une première partie incurvée (164), un bord de lame (D) qui fait saillie à partir d'un bord (E) du corps de lame (165) et est incurvé au niveau d'une seconde partie incurvée (166) qui est incurvée le long d'une direction identique à la première partie incurvée (164), et une partie de contact avec un os (B) qui est sensiblement linéaire et est agencée dans une position reliant le corps de lame (165) au bord de lame (D), la position étant opposée à la seconde partie incurvée (166), dans lequel une partie (E) allant de la première partie (164) à travers la seconde partie incurvée (166) jusqu'au bord de lame (B) est aiguisée, **caractérisé en ce qu'**il comporte :
un appareil de détection et de découpe supérieur et inférieur (50, 60), adapté pour détecter une extrémité de découpe supérieure et inférieure d'une limite entre la rangée d'os et la viande ;
des moyens d'inclinaison (115, 116, 117, 118) adaptés pour incliner le bord de la lame vers le haut et vers le bas ; et
des moyens de déplacement (151, 152, 153 154), adaptés pour déplacer le couteau vers le bas en direction de l'extrémité la plus basse de la limite entre la rangée d'os et la viande, la partie de contact avec un os (B) venant en contact avec les racines des os.

2. Appareil de découpe selon la revendication 1, dans lequel la partie de contact avec un os (B) est plus longue qu'un écartement entre les os d'une rangée.

3. Appareil de découpe selon la revendication 1, dans lequel la partie de contact avec un os (B) est deux fois ou trois fois plus longue qu'un écartement entre les os d'une rangée.

4. Appareil de découpe selon la revendication 1, dans lequel la partie de contact avec un os (B) est sensiblement perpendiculaire à la plaque de base (163).

5. Appareil de découpe selon la revendication 1, dans lequel la partie de contact avec un os (B) est une lame à double tranchant.

6. Procédé de découpe pour séparer une viande fixée sur plusieurs os qui font saillie à partir d'une colonne vertébrale ou d'un autre os et sont séparés les uns des autres dans une rangée, en utilisant un couteau (114) qui comprend : un corps de lame (165) qui s'étend depuis une plaque de base (163) à travers une première partie incurvée (164) ; et un bord de lame (D) qui fait saillie à partir d'un bord (E) du corps de lame (165) et est incurvé au niveau d'une seconde partie incurvée (166) qui est incurvée le long d'une direction qui est la même que la première partie incurvée (164), **caractérisé en ce qu'**il comprend les étapes consistant à :
positionner le couteau (114) au niveau d'une extrémité supérieure d'une limite entre la rangée d'os et la viande ;
avancer le bord de lame (D) dans la rangée d'os,
incliner le bord de lame vers le haut ;
incliner le bord de lame (D) vers le bas, lorsque le bord de lame (D) atteint les racines des os ; et
déplacer le couteau (114) vers le bas en direction de l'extrémité la plus basse de la limite entre la rangée d'os et la viande, la partie de contact avec un os (B) étant en contact avec les racines des os.

7. Procédé de découpe selon la revendication 6, dans lequel :
l'étape de positionnement est une étape destinée à positionner le couteau (114) dans une limite entre la rangée d'apophyses épineuses et la viande ;
l'étape d'inclinaison est une étape destinée à incliner le bord de lame (D) vers le bas, lorsque le bord de lame (D) atteint une partie creuse entre les apophyses mamillaires et les racines des apophyses épineuses ; et
l'étape de déplacement est une étape destinée à déplacer le couteau (114) vers le bas en direction de l'extrémité la plus basse de la limite entre la rangée d'os et la viande, la partie de contact avec un os (B) étant en contact sur la partie creuse entre les apophyses mamillaires et les racines des apophyses épineuses.
